# EUROPEAN PATENT APPLICATION

(11) **EP 4 317 302 A1**
(43) Date of publication of application: **07.02.2024**
(21) Application number: 22780550.4
(22) Date of filing: 25.03.2022
(51) Int. Cl.: C08L 23/12, C08L 25/06, C08L 53/02, C08L 71/12, H01M 50/193

(54) **GASKET FOR NONAQUEOUS-ELECTROLYTIC-SOLUTION BATTERY AND PRODUCTION METHOD THEREFOR**

(30) Priority: 31.03.2021 JP 2021060621; 31.03.2021 JP 2021061011
(71) Applicant: Shinsei Kagaku Kogyo Co., Ltd., Otsu-shi Shiga 5200001 (JP)
(72) Inventor: MIYATA Yoichi, Otsu-shi, Shiga 520-0001 (JP); KUBO Naoto, Otsu-shi, Shiga 520-0001 (JP); OKABE Maki, Otsu-shi, Shiga 520-0001 (JP); TAKANO Yoichi, Hiratsuka-shi, Kanagawa 254-0016 (JP); YANAGISAWA Kenichi, Hiratsuka-shi, Kanagawa 254-0016 (JP)
(74) Representative: Müller-Boré & Partner Patentanwälte PartG mbB
(86) International application number: PCT/JP2022/014321
(87) International publication number: WO 2022/210337

(57) **Abstract**

Provided are a gasket for nonaqueous electrolyte battery which is having higher heat resistance and lower cost and better moldability although including a polypropylene resin, and a method for manufacturing the gasket. The gasket comprises, as the main components, a resin obtained by alloying polypropylene and polyphenylene ether and is shaped by injection-molding. The method for manufacturing a gasket being produced by injection molding using one obtained by previously kneading a material containing polypropylene, polyphenylene ether, and a molding aid, etc. with a twin-screw kneading extruder and cooling and solidifying a resin composition discharged from the twin-screw kneading extruder.

## Description

### TECHNICAL FIELD

The present invention relates to a resin-made gasket for a nonaqueous electrolyte battery used in a nonaqueous electrolyte battery and a method for manufacturing same.

### BACKGROUND ART

A nonaqueous electrolyte battery (hereinafter, typically referred to as a lithium battery.) is a generic term for batteries in which an electrolytic solution is an organic solvent, and corresponds to a lithium ion battery that can be charged, a lithium battery that cannot be charged, and the like. Lithium batteries are utilized as backup power sources and power sources for mobile electronic devices. In recent years, many electronic devices have been used in automobiles, and use of a lithium battery for transmitting a SOS signal has been studied even in a case where a battery or a regenerative power supply is lost due to an accident or a failure.

A gasket is used for the purpose of insulation between a positive electrode and a negative electrode of a lithium battery. As a material used for the gasket, a resin material having an insulating property and not damaged by an electrolytic solution or the like is used. As a specific resin material used for a gasket for a lithium battery, polypropylene or a PPS resin (polyphenylene sulfide) is known (for example, Patent Literature 1).

### CITATIONS LIST

### Patent Literature

Patent Literature 1: JP 2000-156210 A

### SUMMARY OF INVENTION

### TECHNICAL PROBLEMS

Meanwhile, polypropylene used for a gasket for a lithium battery has good molding processability and is inexpensive, and is widely used as a lithium battery for consumer use. However, since polypropylene has low heat resistance, there has been a problem in safety to always store polypropylene in the interior of an automobile. The other PPS resin has high heat resistance, thus is used when a use environment temperature is particularly high, such as the interior of an automobile, the surroundings of an engine, and the power source of a fire alarm. However, since the PPS resin is expensive and is a material having low weld strength, there has been a problem that a gasket cannot be produced unless a special molding processing method is used.

An object of the present invention is to establish a gasket for a nonaqueous electrolyte battery, which is made of a resin material having higher heat resistance than polypropylene and lower cost and better moldability than a PPS resin, and a method for manufacturing the gasket.

### SOLUTIONS TO PROBLEMS

As a result of intensive studies on the present problems, the present inventors have found that by using, as a material, a resin composition obtained by adding polyphenylene ether to polypropylene and alloying the mixture, for a gasket for a nonaqueous electrolyte battery, the heat resistance temperature is higher than that of polypropylene, the cost is lower than that of a PPS resin, and moldability is good, thereby completing the present invention.

Further, the present inventors have found that the gasket produced by injection molding using a material in which a mass ratio of polypropylene to polyphenylene ether is in a range of 25 : 75 to 80 : 20 can be used for a long period of time even at a temperature equal to or higher than a use environment temperature of a gasket made of polypropylene, and have completed the present invention.

The present inventors have found that a gasket made by an injection molding method using, as a material, one obtained by alloying a resin composition containing 5.0 to 30.0 parts by mass of a block copolymer based on 100 parts by mass of the total of the polypropylene and the polyphenylene ether, in which the block copolymer is a hydrogenated product containing a vinyl aromatic compound block and an isoprene polymer block, and the content of the vinyl aromatic compound unit in the block copolymer is 50% by mass or more and less than 80% by mass, has a high heat resistance temperature and good resistance to crimping compression, and have completed the present invention.

Specifically, the above problems have been solved by the following means.
<1> A gasket for a nonaqueous electrolyte battery formed by injection molding, including:
   a resin obtained by alloying polypropylene and polyphenylene ether as the main components.
<2> The gasket for a nonaqueous electrolyte battery according to <1>, in which a mass ratio of polypropylene to polyphenylene ether as the main components is 25 : 75 to 80 : 20.
<3> The gasket for a nonaqueous electrolyte battery according to <1> or <2>, including:
   5.0 to 30.0 parts by mass of a block copolymer based on 100 parts by mass of the total of the polypropylene and the polyphenylene ether as the main components,
   in which the block copolymer is a hydrogenated product containing a vinyl aromatic compound block and an isoprene polymer block, and
   the content of the vinyl aromatic compound unit in the block copolymer is 50% by mass or more and less than 80% by mass.
<4> The gasket for a nonaqueous electrolyte battery according to any one of <1> to <3>, in which when the resin is injection molded to form a test piece having a dumbbell test piece shape of Type A12 shown in JIS K7139 and having a thickness of parallel portion of 1 mm, a tensile elongation rate of the test piece at a tensile speed of 50 mm/min in an atmosphere of 120°C is 20 to 300%.
<5> The gasket for a nonaqueous electrolyte battery according to any one of <1> to <4>, in which when the resin is injection molded to form a gasket sample for a CR2032 size battery, a movement amount until a tensile load reaches 150 N by performing a tensile test at a test speed of 100 mm/min on the gasket sample is 15 mm or more.
<6> The gasket for a nonaqueous electrolyte battery according to any one of <1> to <5>, in which the polyphenylene ether has an intrinsic viscosity at 30°C measured in chloroform of 0.2 to 0.8 dL/g.
<7> A method for manufacturing a gasket for a nonaqueous electrolyte battery, the gasket being produced by injection molding using one obtained by previously kneading a material containing polypropylene, polyphenylene ether and a molding aid with a twin-screw kneading extruder and cooling and solidifying a resin composition discharged from the twin-screw kneading extruder.
<8> The method for manufacturing a gasket for a nonaqueous electrolyte battery according to <7>, in which the material has a mass ratio of polypropylene to polyphenylene ether of 25 : 75 to 80 : 20, and
   contains 5.0 to 30.0 parts by mass of a block copolymer based on 100 parts by mass of the total of the polypropylene and the polyphenylene ether,
   the block copolymer is a hydrogenated product containing a vinyl aromatic compound block and an isoprene polymer block, and
   the content of the vinyl aromatic compound unit in the block copolymer is 50% by mass or more and less than 80% by mass.
<9> The method for manufacturing a gasket for a nonaqueous electrolyte battery according to <7> or <8>, including setting a mold temperature during the injection molding to 50 to 120°C.
<10> The method for manufacturing a gasket for a nonaqueous electrolyte battery according to any one of <7> to <9>, in which surface roughness of a cavity surface at a mold portion forming at least an outer seal wall portion and a bottom seal portion of the gasket as a mold used for the injection molding has a numerical value of Rz indicated by JIS B0601 of 0.05 to 1.2 µm.
<11> The method for manufacturing a gasket for a nonaqueous electrolyte battery according to any one of <7> to <10>, in which as the molding material, one obtained by mixing a pulverized material of an unnecessary molded article portion generated during the gasket molding at a ratio of 70 parts by mass or less of the entire resin composition is used.
<12> The method for manufacturing a gasket for a nonaqueous electrolyte battery according to any one of <7> to <11>, in which injection molding is performed by dissolving 0.02 to 3.00 parts by mass of an inert gas into the molding material.

### ADVANTAGEOUS EFFECTS OF INVENTION

As described above, the gasket for a nonaqueous electrolyte battery of the present invention contains, as the main components, an alloy material obtained by mixing polypropylene and polyphenylene ether, and thus it is possible to provide a feature that the heat resistant temperature is higher than that of polypropylene, and moldability is better and the cost is lower than that of a PPS resin. Furthermore, the gasket for a nonaqueous electrolyte battery of the present invention has good molding processability, and also has mechanical properties and chemical resistance required for, for example, a lithium battery as a nonaqueous electrolyte battery.

### BRIEF DESCRIPTION OF DRAWINGS

Fig. 1 is a cross-sectional view showing a schematic configuration of a flat sealed battery using a gasket according to an embodiment of the present invention.
Fig. 2A is a cross-sectional view showing a sealing plate prepared by press molding.
Fig. 2B is a cross-sectional view showing an exterior can prepared by press molding.
Fig. 3 is a cross-sectional view showing a gasket integrally molded by insert molding on an inner surface of the exterior can.
Fig. 4 is a cross-sectional view showing a state before the exterior can (positive electrode can) is fitted to the sealing plate (negative electrode can) and a side wall of the exterior can is crimped.
Fig. 5 is a partially enlarged cross-sectional view showing a state where the exterior can (positive electrode can) is fitted to the sealing plate (negative electrode can) and a side wall of the exterior can is crimped.
Fig. 6 is a plan view showing a shape and dimensions of a dumbbell test piece used in Examples.

### DESCRIPTION OF EMBODIMENTS

Hereinafter, embodiments of the present invention will be described in detail with reference to drawings. In the drawings, the same or equivalent portions are denoted by the same reference numerals.

As an embodiment of a flat sealed battery to which the gasket for a nonaqueous electrolyte battery of the present invention is applied, a coin type lithium battery is shown. The present invention can be applied not only to lithium batteries but also to gaskets of various nonaqueous electrolyte batteries.

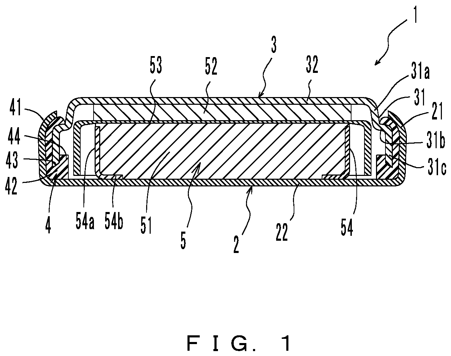

As shown in Fig. 1, a coin type battery 1 includes an exterior can 2 as a bottomed cylindrical positive electrode can having a side wall 21, a sealing plate 3 as an inverted dish-shaped negative electrode can which covers an opening of the exterior can 2 and is disposed inside the exterior can 2, a gasket 4 disposed between the side wall 21 of the exterior can 2 and a tube portion 31 of the sealing plate 3, and a power generating element 5 housed in a space formed between the exterior can 2 and the sealing plate 3. The coin type battery 1 is formed into a flat coin shape as a whole by fitting the exterior can 2 and the sealing plate 3. In addition to the power generating element 5, a nonaqueous electrolytic solution (not shown) is also sealed in the space formed between the exterior can 2 and the sealing plate 3 of the coin type battery 1.

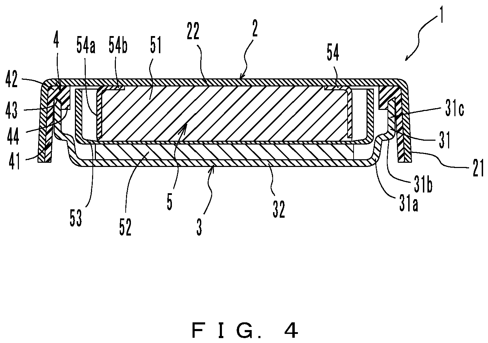

The exterior can 2 is made of a metal material such as stainless steel, and is formed into a bottomed cylindrical shape by press molding. The exterior can 2 includes a circular bottom surface portion 22 and the cylindrical side wall 21 formed continuously with the bottom surface portion 22 on an outer periphery thereof. As shown in Fig. 4, in a state before crimping toward the sealing plate 3, the side wall 21 is formed in a tapered shape expanding outward with respect to the bottom surface portion 22 in a longitudinal sectional view. In the exterior can 2, in a state where the gasket 4 is sandwiched between the exterior can 2 and the sealing plate 3, an opening end side of the side wall 21 is bent inward and crimped to an outer peripheral portion of the sealing plate 3, whereby a root portion of the side wall 21 becomes substantially perpendicular.

The sealing plate 3 is also made of a metal material such as stainless steel similarly to the exterior can 2, and is formed into a bottomed cylindrical shape by press molding. The sealing plate 3 includes a circular flat portion 32 and the cylindrical tube portion 31 formed continuously with the flat portion 32 on an outer periphery thereof. The tube portion 31 includes a base end portion 31a whose diameter is increased from an edge portion of the flat portion 32, a step portion 31b whose diameter is further increased from the base end portion 31a, and an open portion 31c extending substantially vertically downward from the step portion 31b. As shown in Fig. 1, an opening end portion of the side wall 21 of the exterior can 2 is bent and crimped to the step portion 31b.

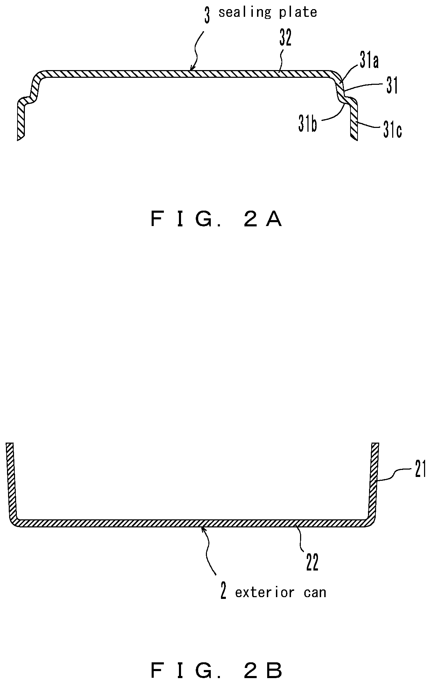

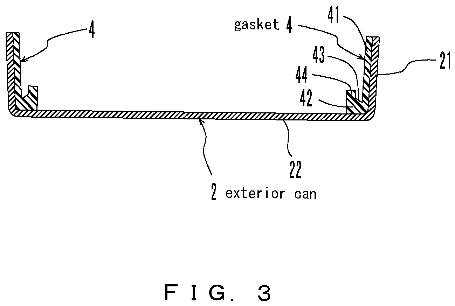

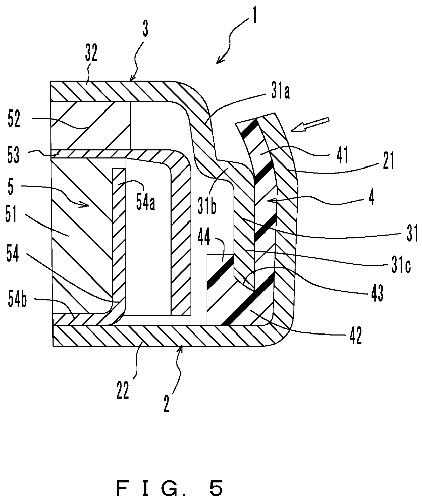

The gasket 4 is formed in a ring shape by insert molding from an inner opening end of the side wall 21 of the exterior can 2 to an edge portion of an upper surface of the bottom surface portion 22. For example, the exterior can 2 and the sealing plate 3 are formed by press molding (see Figs. 2A and 2B), and then the gasket 4 is integrally molded on the inner surface side of the side wall 21 of the exterior can 2 by injection molding (see Fig. 3). The gasket 4 may be insert-molded with the sealing plate 3, or may be independently molded and assembled between the exterior can 2 and the sealing plate 3. As shown in Fig. 5, the gasket 4 includes an outer seal wall portion 41 from an inner opening end of the side wall 21 of the exterior can 2 to the vicinity of the bottom surface portion 22, a bottom seal portion 42 continuous with the outer seal wall portion 41 and disposed at an edge portion of the upper surface of the bottom surface portion 22 of the exterior can 2, an annular recess 43 formed in the bottom seal portion 42 and into which a distal end of the tube portion 31 of the sealing plate 3 is fitted, and an annular rib 44 forming a part of the annular recess 43 and protruding toward an opening portion of the side wall 21 of the exterior can 2.

As shown in Figs. 3 and 4, the outer seal wall portion 41 of the gasket 4 is formed to have a uniform thickness except for the root portion by being brought into close contact with the entire inner surface of the side wall 21 of the exterior can 2, and is formed in a substantially cylindrical shape. Further, since the outer seal wall portion 41 is injection molded along the taper of the side wall 21 of the exterior can 2, the outer seal wall portion 41 is formed in a tapered shape as a whole so that the inner diameter becomes larger toward the opening end side.

The outer seal wall portion 41 covers the open portion 31c and the step portion 31b of the tube portion 31 of the sealing plate 3 and is pressed against the step portion 31b side of the base end portion 31a by crimping the side wall 21 of the exterior can 2. In the outer seal wall portion 41, a portion facing the step portion 31b of the tube portion 31 when the exterior can 2 is crimped to the sealing plate 3 is compressed by the opening end portion of the side wall 21 of the exterior can 2 and the step portion 31b of the tube portion 31 as shown in Figs. 1 and 5. As a result, the space between the exterior can 2 and the sealing plate 3 is sealed by the outer seal wall portion 41.

The annular recess 43 and the annular rib 44 are formed in the bottom seal portion 42 of the gasket 4, and the annular recess 43 is formed to have a groove width substantially equal to the thickness of the open portion 31c of the tube portion 31 in the sealing plate 3. The groove width of the annular recess 43 may be larger or slightly narrower than the thickness of the open portion 31c of the tube portion 31. The height of the annular rib 44 is preferably set to more than 0% and 80% or less of the entire height of the gasket 4. Further preferably, the height of the annular rib 44 is preferably set to 10% or more and 50% or less of the entire height of the gasket 4. By setting the height of the annular rib 44 in this manner, waste of the amount of resin forming the gasket 4 is reduced as much as possible, and a sealing effect can be improved.

By fitting a distal end of the open portion 31c of the tube portion 31 in the sealing plate 3 into the annular recess 43 in a press-fitted state, positioning of the sealing plate 3 with respect to the exterior can 2 can be easily performed, and since the distal end of the tube portion 31 is press-fitted into the annular recess 43, the space between the exterior can 2 and the sealing plate 3 is reliably sealed. In addition, strength of the gasket 4 is also improved by the annular rib 44.

The power generating element 5 includes a positive electrode material 51 (electrode material) obtained by forming a positive electrode active material or the like into a disk shape, a negative electrode material 52 obtained by forming metal lithium or a lithium alloy of a negative electrode active material into a disk shape, and a separator 53 made of a nonwoven fabric. As shown in Fig. 1, the positive electrode material 51 is positioned inside the exterior can 2, and the negative electrode material 52 is positioned inside the sealing plate 3. The separator 53 is disposed between the positive electrode material 51 and the negative electrode material 52.

The positive electrode material 51 contains manganese dioxide as the positive electrode active material. The positive electrode material 51 is obtained by forming a positive electrode mixture prepared by mixing graphite, a tetrafluoroethylene-hexafluoropropylene copolymer and hydroxypropyl cellulose with manganese dioxide into a disk shape, and is held by a positive electrode ring 54 made of stainless steel or the like having predetermined rigidity and conductivity.

The positive electrode ring 54 is formed by integrally forming a cylindrical portion 54a in contact with a side surface of the positive electrode material 51 and an annular flange portion 54b extending from one end side of the cylindrical portion 54a toward the inside of the cylindrical portion 54a and in contact with a bottom surface of the positive electrode material 51. The positive electrode ring 54 having such a configuration can restrict deformation of the positive electrode material 51 in the positive electrode ring 54 in a radial direction and toward one end side. Then, since the other end side of the cylindrical portion 54a of the positive electrode ring 54 is opened, the positive electrode material 51 can freely expand. Therefore, even when the thickness of the negative electrode material 52 decreases during discharging, the positive electrode material 51 expands toward the negative electrode material 52 side along the positive electrode ring 54, so that it is possible to prevent the positive electrode material 51 and the negative electrode material 52 from being separated from each other.

The separator 53 is made of a nonwoven fabric made of polybutylene terephthalate fiber. The separator 53 is impregnated with a nonaqueous electrolytic solution in the coin type battery 1.

The nonaqueous electrolytic solution is, for example, a solution obtained by dissolving LiClO₄ in a solution obtained by mixing propylene carbonate and 1,2-dimethoxyethane.

In the above configuration, when the opening end portion of the side wall 21 of the exterior can 2 is crimped to the step portion 31b of the sealing plate 3 as indicated by a white arrow in Fig. 5, the outer seal wall portion 41 of the gasket 4 is compressed by the opening end portion of the side wall 21 of the exterior can 2 and is pressed toward the tube portion 31. As a result, the outer seal wall portion 41 is sandwiched between the side wall 21 of the exterior can 2 and the tube portion 31 of the sealing plate 3 to function as a seal. Further, the tube portion 31 of the sealing plate 3 is pressed downward by the crimping of the side wall 21 of the exterior can 2, the tube portion 31 is pressed downward in the annular recess 43, and the bottom surface portion 22 of the exterior can 2 and the tube portion 31 of the sealing plate 3 are sealed by the bottom seal portion 42 of the gasket 4. In this manner, the space formed between the sealing plate 3 and the exterior can 2 is sealed against external space by a portion of the outer seal wall portion 41 located on the step portion 31b of the tube portion 31 and the bottom seal portion 42 of the gasket 4, and the isolated state is maintained.

### (Gasket of Present Embodiment)

The gasket 4 of the present embodiment is made by an injection molding method using, as a material, a resin composition obtained by alloying a polypropylene resin (PP) and a polyphenylene ether resin (PPE). In the alloy of polypropylene and polyphenylene ether used in the present embodiment, it is preferable that a mass ratio of polypropylene to polyphenylene ether is in the range of 25 : 75 to 80 : 20 because heat resistance is high and moldability is good. In the state of the alloy at that time, islands of polyphenylene ether are finely dispersed in a sea of polypropylene, and target performance of the gasket of the present invention appears. Moreover, it is further preferable that the mass ratio of polypropylene to polyphenylene ether is in the range of 25 : 75 to 80 : 20 because the heat resistance and elongation are provided and sealing performance is good. When the ratio of polyphenylene ether resin is less than 20 in terms of the mass ratio of polypropylene to polyphenylene ether, the heat resistance required by the market may be insufficient, which is not preferable. When the ratio of the polyphenylene ether resin in terms of the mass ratio of polypropylene to polyphenylene ether is higher than 75, the heat resistance is good, but softness of the gasket is lost, and there is a concern that cracking may occur when crimping is performed in battery manufacturing, which is not preferable. Furthermore, when the mass ratio of polyphenylene ether is more than 75, the moldability is significantly poor, and it is difficult to mold a gasket. In the mass ratio of polypropylene to polyphenylene ether, a mass ratio in which polypropylene is more than 25 parts by mass and polyphenylene ether is less than 75 parts by mass is preferable. In this case, a tensile elongation is in an appropriate range as the gasket material, and the moldability is also good.

In addition, the gasket 4 of the present embodiment may contain 5.0 to 30.0 parts by mass of (c) a block copolymer based on 100 parts by mass of the total of (a) a polypropylene resin and (b) a polyphenylene ether resin. The block copolymer as the component (c) is a hydrogenated product containing a vinyl aromatic compound block (c1) and an isoprene polymer block (c2), and the content of the vinyl aromatic compound unit in (c) the block copolymer is 50% by mass or more and less than 80% by mass. With such a configuration, a gasket having sufficiently high toughness is obtained even when heat and load are applied. That is, it is presumed that by using (a) the polypropylene resin as a main component, ductility of the gasket is improved and tensile nominal strain can be increased. Moreover, it is presumed that by using (b) the polyphenylene ether resin as a main component, the gasket can effectively exhibit high heat resistance and mechanical strength inherent in the polyphenylene ether resin as the component (b). Furthermore, it is presumed that the toughness and impact resistance of the gasket can be enhanced by (c) the block copolymer. Then, since the vinyl aromatic compound block (c1) part of the block copolymer as the component (c) is easily compatible with (b) the polyphenylene ether resin, it is presumed that (c) the block copolymer is easily dispersed in (b) the polyphenylene ether resin, and the toughness and impact resistance can be imparted to (b) the rigid polyphenylene ether resin region. In addition, since the isoprene polymer block (c2) has an ethylene-propylene alternating copolymerization structure, it is presumed that the isoprene polymer block (c2) is also excellent in compatibility with (a) the polypropylene resin and exhibits ideal rubber-like properties. In particular, it is presumed that by precisely preparing the blending ratio of the components (a) to (c) and the ratio of the vinyl aromatic compound unit in (c) the block copolymer (c), a gasket having sufficient toughness could be provided even when heat and load were applied. Therefore, according to the present embodiment, a gasket for a nonaqueous electrolyte battery having excellent heat resistance and mechanical characteristics while having good molding processability is obtained. The nonaqueous electrolyte battery needs to strictly prevent moisture from entering the battery more than the aqueous solution secondary battery, but according to the present embodiment, a gasket for a nonaqueous electrolyte battery having excellent sealing performance and explosion-proof safety is obtained.

### <(a) Polypropylene Resin>

The gasket of the present embodiment contains (a) the polypropylene resin. By containing the polypropylene resin, the ductility of the gasket to be obtained can be improved. (a) The polypropylene resin used in the present embodiment is preferably a propylene homopolymer or a copolymer obtained by copolymerizing propylene with another α-olefin (for example, ethylene, butene-1, hexene-1, and the like) (however, the ratio of propylene is more than 50% by mass, preferably 80% by mass or more.), and more preferably a propylene homopolymer.

In the present embodiment, (a) the polypropylene resin preferably contains a polypropylene resin having a melt flow rate (MFR) of 8.0 g/10 min or less and a polypropylene resin having the MFR of 10.0 g/10 min or more, at a load of 2.16 kg and a temperature of 230°C as measured in accordance with JIS K7210. By blending the polypropylene resin having an MFR of 8.0 g/10 min or less, fluidity of the resin composition tends to be improved and the moldability tends to be further improved, and by blending the polypropylene resin having an MFR of 10.0 g/10 min or more, mechanical properties such as tensile properties and bending characteristics of the gasket to be obtained tend to be improved, and particularly, the tensile nominal strain tends to be further improved. The MFR of the polypropylene resin having an MFR of 8.0 g/10 min or less is preferably 2.0 g/10 min or more, and more preferably 4.0 g/10 min or more, and is preferably 7.0 g/10 min or less, and more preferably 6.5 g/10 min or less. Also, the MFR of the polypropylene resin having an MFR of 10.0 g/10 min or more is preferably 11.0 g/10 min or more, and more preferably 11.5 g/10 min or more, and is preferably 22.0 g/10 min or less, and more preferably 16.0 g/10 min or less. Furthermore, a difference in MFR between the polypropylene resin having an MFR of 8.0 g/10 min or less and the MFR of 10.0 g/10 min or more is preferably 2.0 g/10 min or more, and more preferably 4.0 g/10 min or more, and is preferably 10.0 g/10 min or less, and more preferably 8.0 g/10 min or less. Within such ranges, the resin composition tends to exhibit both moldability and tensile nominal strain at high level. The mass ratio of the polypropylene resin having an MFR of 8.0 g/10 min or less to the polypropylene resin having an MFR of 10.0 g/10 min or more is preferably 1: 1 to 5: 1, more preferably 1.5: 1 to 4: 1, and further preferably 2: 1 to 4: 1. In the present embodiment, the polypropylene resin may be used alone, and when the polypropylene resin is used alone, it is preferable to use a polypropylene resin having the MFR of 2.0 to 16.0 g/10 min or less.

### <(b) Polyphenylene Ether Resin>

The gasket of the present embodiment contains (b) the polyphenylene ether resin. By containing the polyphenylene ether resin, a gasket having high heat resistance and mechanical strength inherent in the polyphenylene ether resin is obtained. As (b) the polyphenylene ether resin used in the gasket of the present embodiment, a known polyphenylene ether resin can be used, and for example, a polymer having a constituent unit represented by the following formula (1) in a main chain is exemplified. (b) The polyphenylene ether resin may be either a homopolymer or a copolymer. 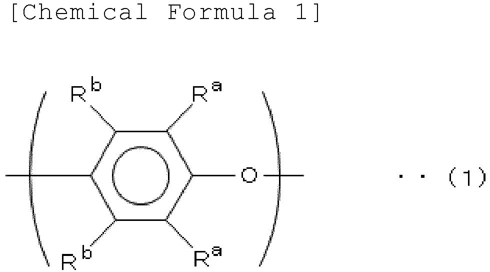 wherein two R^{a}s are each independently represent a hydrogen atom, a halogen atom, a primary or secondary alkyl group, an aryl group, an aminoalkyl group, a halogenated alkyl group, a hydrocarbon oxy group, or a halogenated hydrocarbon oxy group, and two R^{b}s each independently represent a hydrogen atom, a halogen atom, a primary or secondary alkyl group, an aryl group, a halogenated alkyl group, a hydrocarbon oxy group, or a halogenated hydrocarbon oxy group. However, both two R^{a}s are not hydrogen atoms.

R^{a} and R^{b} are each independently preferably a hydrogen atom, a primary or secondary alkyl group, or an aryl group. Suitable examples of the primary alkyl group include a methyl group, an ethyl group, a n-propyl group, a n-butyl group, a n-amyl group, an isoamyl group, a 2-methylbutyl group, a 2,3-dimethylbutyl group, a 2-, 3- or 4-methylpentyl group, and a heptyl group. Suitable examples of the secondary alkyl group include an isopropyl group, a sec-butyl group, and a 1-ethylpropyl group. In particular, R^{a} is preferably a primary or secondary alkyl group having 1 to 4 carbon atoms or a phenyl group. R^{b} is preferably a hydrogen atom.

Examples of a suitable homopolymer of (b) the polyphenylene ether resin include polymers of 2,6-dialkylphenylene ethers such as poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether), and poly(2-methyl-6-propyl-1,4-phenylene ether. Examples of the copolymer include 2,6-dialkylphenol/2,3,6-trialkylphenol copolymers such as a 2,6-dimethylphenol/2,3,6-trimethylphenol copolymer, a 2,6-dimethylphenol/2,3,6-triethylphenol copolymer, a 2,6-diethylphenol/2,3,6-trimethylphenol copolymer, and a 2,6-dipropylphenol/2,3,6-trimethylphenol copolymer, a graft copolymer obtained by graft-polymerizing styrene to poly(2,6-dimethyl-1,4-phenylene ether), a graft copolymer obtained by graft-polymerizing styrene to a 2,6-dimethylphenol/2,3,6-trimethylphenol copolymer, and the like.
(b) The polyphenylene ether resin in the present embodiment is particularly preferably poly(2,6-dimethyl-1,4-phenylene ether) or a 2,6-dimethylphenol/2,3,6-trimethylphenol random copolymer.
(b) The polyphenylene ether resin has an intrinsic viscosity measured in chloroform at 30°C of preferably 0.2 to 0.8 dL/g, and more preferably 0.3 to 0.6 dL/g. By setting the intrinsic viscosity to 0.2 dL/g or more, the mechanical strength of the resin composition tends to be further improved, and by setting the intrinsic viscosity to 0.8 dL/g or less, the fluidity tends to be further improved, and molding processing tends to be easier. Two or more kinds of (b) the polyphenylene ether resins having different intrinsic viscosities may be used in combination to set the range of the intrinsic viscosity.

A method for producing (b) the polyphenylene ether resin used in the present embodiment is not particularly limited, and for example, a method of oxidatively polymerizing a monomer such as 2,6-dimethylphenol in the presence of an amine copper catalyst according to a known method can be adopted, and at that time, the intrinsic viscosity can be controlled within a desired range by selecting reaction conditions. Control of the intrinsic viscosity can be achieved by selecting conditions such as a polymerization temperature, a polymerization time, and a catalyst amount.

In the resin composition for forming the gasket of the present embodiment, the mass ratio of (a) the polypropylene to (b) the polyphenylene ether is 25: 75 to 80: 20, and (b) the polyphenylene ether resin is contained in the resin composition in a ratio of 75 parts by mass or less, preferably 60 parts by mass or less, and also may also be contained in a ratio of 37 parts by mass or less. It is possible to further improve heat resistance (in particular, deflection temperature under load) and bending characteristics of the gasket to be obtained by setting the ratio at equal to or less than the upper limit. As the lower limit, it is preferably contained in a ratio of, for example, 20 parts by mass or more. In the present embodiment, one kind of (b) the polyphenylene ether resin may be used alone, or two or more kinds thereof may be used in mixture. When two or more kinds are contained, the total amount is preferably in the above range. As long as the resin composition has a deflection temperature under load as an index of heat resistance of 60°C or more, the gasket of the present embodiment made of the resin composition can be applied to a nonaqueous electrolyte battery used in a situation where the use environment temperature is high. Preferably, the gasket of the present embodiment made of the resin composition having a deflection temperature under load of 100°C or more can be used for a nonaqueous electrolyte battery requiring high reliability even in a high-temperature environment. As a method for measuring the deflection temperature under load, reference is made to Examples (Evaluation 1) described later.

As another form of the resin composition for forming the gasket of the present embodiment, the resin composition may contain 20.0 to 50.0% by mass of (a) the polypropylene resin and 50.0 to 80.0% by mass of (b) the polyphenylene ether resin. Also, the polyphenylene ether resin is contained in the resin composition in a ratio of preferably 38.0% by mass or more, more preferably 40.0% by mass or more, and may also be contained in an amount of 42.0% by mass or more. By setting at equal to or greater than the lower limit, it is possible to further improve the heat resistance (in particular, the deflection temperature under load) and the bending characteristics of the resulting molded body. As the upper limit, it is preferably contained, for example, in a ratio of preferably 76.0% by mass or less, more preferably 70.0% by mass or less, further preferably 65.0% by mass or less, still more preferably 60.0% by mass or less, even more preferably 55.0% by mass or less, and further even more preferably 50.0% by mass or less.

In the present embodiment, one kind of the polyphenylene ether resin may be used alone, or two or more kinds thereof may be used in mixture. When two or more kinds are contained, the total amount is preferably in the above range.

### <(c) Block Copolymer>

The gasket of the present embodiment contains (c) the block copolymer in a ratio of 5.0 to 30.0 parts by mass based on 100 parts by mass of the total of (a) the polypropylene resin and (b) the polyphenylene ether resin. (c) The block copolymer is a hydrogenated product containing a vinyl aromatic compound block (c1) and an isoprene polymer block (c2), and the content of the vinyl aromatic compound unit in the block copolymer as the component (c) is 50% by mass or more and less than 80% by mass. With such a configuration, even when the gasket to be obtained is exposed to a high temperature, the tensile nominal strain can be increased. The block copolymer as the component (c) contains the vinyl aromatic compound block (c1). Since the vinyl aromatic compound block (c1) is excellent in compatibility with (b) the polyphenylene ether resin, dispersibility of (c) the block copolymer in (b) the polyphenylene ether resin can be improved, and the toughness and impact resistance of the gasket to be obtained can be improved. In addition, when an elastomer component is blended in the resin composition, heat resistance tends to decrease, but since the block copolymer as the component (c) used in the present embodiment contains the vinyl aromatic compound block (c1) as a main component, it is possible to effectively suppress the decrease in heat resistance of the gasket to be obtained from the resin composition.

The vinyl aromatic compound block (c1) contains a vinyl aromatic compound unit (preferably a styrene unit) as the main component, and preferably 90% by mass or more, more preferably 95% by mass or more, or further preferably 98% by mass or more of the vinyl aromatic compound block (c1) is a vinyl aromatic compound unit. The vinyl aromatic compound is a compound having a vinyl group and an aromatic ring group, and is preferably a compound represented by CH₂ = CH-L¹-Ar¹. Here, L1 is a single bond or a divalent linking group, preferably a single bond or a divalent linking group having a formula weight of 14 to 100, more preferably a single bond or two linking groups having a formula weight of 14 to 50, and further preferably a single bond. When L¹ is a divalent linking group, it is preferably an aliphatic hydrocarbon group or a group consisting of a combination of an aliphatic hydrocarbon group and -O-. Here, the formula weight means a mass (g) per mole of a portion corresponding to L¹ of an aromatic vinyl compound. Ar¹ is an aromatic ring group, preferably a substituted or unsubstituted benzene ring group or naphthalene ring (preferably a benzene ring), and further preferably an unsubstituted benzene ring group.

The aromatic vinyl compound is preferably a compound having a molecular weight of 104 to 600, and more preferably a compound having a molecular weight of 104 to 400. Examples of the aromatic vinyl compound include styrene monomers derived from styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, tribromostyrene, and the like (styrene derivatives), and styrene is particularly preferable.

Moreover, the block copolymer as the component (c) contains the isoprene polymer block (c2). The isoprene polymer block (c2) has an alternating copolymerization structure of ethylene and propylene by hydrogenation and softly stretches, so that the tensile nominal strain can be effectively improved. The isoprene polymer block (c2) contains an isoprene unit as a main component, and preferably 90% by mass or more, more preferably 95% by mass or more, or further preferably 98% by mass or more of the isoprene polymer block (c2) is an isoprene unit.

In the present embodiment, the content of the vinyl aromatic compound unit in the block copolymer as the component (c) is 50% by mass or more, preferably 55% by mass, and more preferably 60% by mass or more. By setting at equal to or greater than the lower limit, the toughness and impact resistance of the gasket to be obtained can be effectively improved without lowering the heat resistance. In addition, the content of the vinyl aromatic compound unit in the block copolymer as the component (c) is less than 80% by mass, preferably 75% by mass or less, more preferably 70% by mass or less, and still more preferably 66% by mass or less. By setting at equal to or less than the upper limit, the tensile nominal strain of the gasket to be obtained at a high temperature tends to be further improved. Here, the vinyl aromatic compound unit is not limited to the vinyl aromatic compound unit contained in the vinyl aromatic compound block (c1), and is intended to include the vinyl aromatic compound unit contained at any position of (c) the block copolymer.

The block copolymer as the component (c) used in the present embodiment preferably has a vinyl aromatic compound block (c1) at least one end of the molecule, and more preferably at both ends of the molecule. The block copolymer as the component (c) used in the present embodiment may contain a region other than the vinyl aromatic compound block (c1) and the isoprene polymer block (c2), but the ratio of the other region is preferably 5% by mass or less, and more preferably 3% by mass or less of (c) the block copolymer. As specific examples of (c) the block copolymer, a hydrogenated styrene/isoprene copolymer (SEP), a hydrogenated styrene/isoprene/styrene copolymer (SEPS), and a hydrogenated styrene/isoprene/butylene/styrene copolymer (SEEPS) are preferable, and a hydrogenated styrene/isoprene/styrene copolymer (SEPS) is more preferable. More specifically, (c) the block copolymer preferably includes a structure represented by the following formula (2), and the structure represented by the following formula (2) more preferably occupies 95% by mass or more of the whole, and the structure represented by the following formula (2) further preferably occupies 99% by mass or more of the whole. 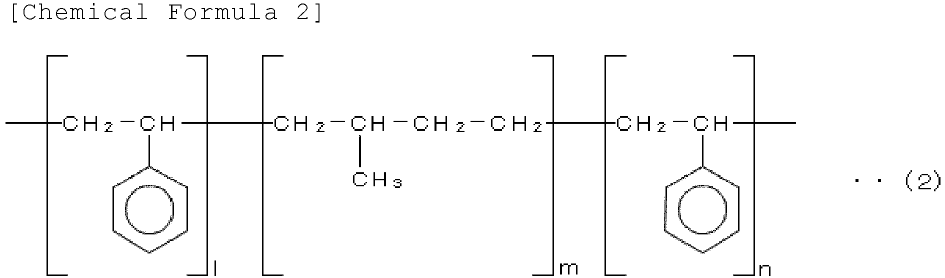 wherein l, m, and n are each a positive number, and the total of a unit represented by l and a unit represented by n is a value at which the mass ratio of the styrene unit is 50% by mass or more and less than 80% by mass.

In the present embodiment, the block copolymer as the component (c) preferably flows when measured under a load of 2.16 kg and a temperature of 230°C in accordance with JIS K7210. Specifically, the melt flow rate (MFR) is preferably 0.1 g/10 min or more, further 0.15 g/10 min or more, and still more preferably 0.3 g/10 min or more. By setting at equal to or greater than the lower limit, the fluidity of the resin composition tends to be improved, and the moldability tends to be further improved. Also, the MFR is preferably 7.0 g/10 min or less, more preferably 5.0 g/10 min or less, further preferably 3.0 g/10 min or less, and still more preferably 2.0 g/10 min or less, and may be 1.0 g/10 min or less. By setting at equal to or less than the upper limit, the toughness and impact resistance of the whole resin composition tend to be further improved.

### <Blend Ratio of Components (a) to (c)>

The gasket of the present embodiment contains 5.0 to 30.0 parts by mass of (c) the block copolymer, based on 100 parts by mass of the total of 25 to 80 parts by mass of (a) the polypropylene resin and 75 to 20 parts by mass of (b) the polyphenylene ether resin.

The mass ratio of (a) the polypropylene resin and (b) the polyphenylene ether resin ((a) : (b)) may be 25 to 80 parts by mass: 75 to 20 parts by mass, and is preferably 29 to 80 parts by mass: 71 to 20 parts by mass, more preferably 40 to 80 parts by mass: 60 to 20 parts by mass, and further preferably 63 to 80 parts by mass: 37 to 20 parts by mass. By setting at the above ratio, in the gasket to be obtained, the ductility of the polypropylene resin as the component (a) can be effectively exhibited while the heat resistance of the polyphenylene ether resin as the component (b) is effectively maintained.

In addition, as another form of the resin composition used in the present embodiment, it is preferable to contain 5.0 to 30.0 parts by mass of (c) the block copolymer based on 100 parts by mass of the total of 50.0 to 80.0 parts by mass of (b) the polyphenylene ether resin and 50.0 to 20.0 parts by mass of (a) the polypropylene resin.

In another embodiment, the mass ratio of (b) the polyphenylene ether resin and (a) the polypropylene resin ((b) : (a)) is preferably 50.0 to 70.0 parts by mass: 50.0 to 30.0 parts by mass, more preferably 50.0 to 65.0 parts by mass: 50.0 to 35.0 parts by mass, further preferably 50.1 to 61.0 parts by mass: 49.9 to 39.0 parts by mass, and still more preferably 50.1 to 59.9 parts by mass: 49.9 to 40.1 parts by mass. By setting at the above ratio, in the molded body to be obtained, the ductility of (a) the polypropylene resin can be effectively exhibited while the heat resistance of (b) the polyphenylene ether resin is effectively maintained.

The content of (c) the block copolymer in the gasket of the present embodiment is 5.0 parts by mass or more, preferably 6.0 parts by mass or more, more preferably 7.0 parts by mass or more, further preferably 8.0 parts by mass or more, and still more preferably 9.0 parts by mass or more, and may be 10.0 parts by mass or more, 11.0 parts by mass or more, or 12.0 parts by mass or more, based on 100 parts by mass of the total of (a) the polypropylene resin and (b) the polyphenylene ether resin. By setting at equal to or greater than the lower limit, it is possible to impart more excellent toughness and impact resistance to the gasket. The content of the block copolymer as the component (c) in the gasket of the present embodiment is 30.0 parts by mass or less, preferably 28.0 parts by mass or less, and more preferably 27.0 parts by mass or less, and may be 25.0 parts by mass or less, 23.0 parts by mass or less, or 20.0 parts by mass or less, based on 100 parts by mass of the total of the polypropylene resin as the component (a) and the polyphenylene ether resin as the component (b). By setting at equal to or less than the upper limit, the toughness and impact resistance of the gasket to be obtained can be further improved without lowering the heat resistance.

In the present embodiment, the mass ratio of (a) the polypropylene resin and (c) the block copolymer ((a)/(c)) is preferably 1.0 or more, more preferably 1.5 or more, further preferably 2.0 or more, and further preferably 2.5 or more, and may be 3.0 or more. By setting at equal to or less than the upper limit, the tensile nominal strain and impact resistance of the gasket to be obtained at a high temperature tends to be further improved. In addition, the ratio (a)/(c) is preferably 5.0 or less, and more preferably 4.7 or less, and may be 4.3 or less, and also be 3.8 or less. By setting at equal to or less than the upper limit, the toughness and impact resistance of the gasket to be obtained tend to be further improved without lowering the heat resistance. The gasket of the present embodiment may each contain only one kind or two or more kinds of (a) the polypropylene resin, (b) the polyphenylene ether resin, and (c) the block copolymer. When two or more kinds are contained, the total amount is preferably in the above range.

The alloy material of polypropylene and polyphenylene ether used in the present embodiment may be added with a molding aid for facilitating molding processing such as an antioxidant, a mold release agent or a lubricant within a range that does not affect physical properties and chemical properties of the alloy material of polypropylene and polyphenylene ether. In addition, in order to improve the characteristics of the gasket for a lithium battery, components such as glass, talc, kaolin, and boron nitride may be added as powder or filler.

With respect to a method for producing an alloy of polypropylene and polyphenylene ether to be used in the gasket of the present embodiment, a target alloy of polypropylene and polyphenylene ether can be produced by dry-blending polypropylene and sufficiently dried polyphenylene ether at a ratio defined in a preceding stage in advance, and blending them with a twin-screw kneading extruder. In addition, in the present embodiment, a target alloy of polypropylene and polyphenylene ether can be produced by dry-blending (a) the polypropylene, (b) the polyphenylene ether, and (c) the block copolymer as a hydrogenated product containing the vinyl aromatic compound block (c1) and the isoprene polymer block (c2) at a ratio defined in a preceding stage in advance, and blending them with a twin-screw kneading extruder. When dry blending is performed, productivity of the gasket in the injection molding step is improved by adding an injection molding aid such as a release agent or an antioxidant. Further, by adding a compatibilizer that makes both polypropylene and polyphenylene ether active, a stable alloy material is obtained. As the compatibilizer, a compound having a portion compatible with or having high affinity with polypropylene and/or polyphenylene ether can be used, and for example, a PP-PPE block copolymer, a PP-PPE graft copolymer, a polymer having a functional group such as an acid, an epoxy group, a hydroxyl group, or an oxazoline group, a compound having two reaction sites of a double bond and an acid such as maleic anhydride, or the like may be used. In addition, the alloy material discharged from a nozzle of the twin-screw kneading extruder is cooled using cooling water or an air cooling fan, and then cut into a length of 2 to 4 mm by a pelletizer, thereby forming pellets usable for injection molding. If the twin-screw extruder used here is a twin-screw kneading extruder used for producing a general alloy material such as ABS resin, a material that can be used as the gasket material of the present embodiment is obtained. It is considered that by alloying the polypropylene and the polyphenylene ether by reactive processing such as repeating a large amount of shearing force in the twin-screw kneading extruder or performing dynamic crosslinking (crosslinking reaction under shear at the same time as melting and kneading), dispersibility and density of the polyphenylene ether resin phase can be increased by reducing the dispersion particle diameter of the polyphenylene ether as a dispersed phase in the polypropylene resin continuous phase, and according to this alloy material, a gasket product having high tensile elongation and impact absorbability and being hardly broken is obtained.

Although not illustrated, a general injection molding machine for plastic processing is used as the injection molding method used in the present embodiment. For example, an in-line screw type injection molding machine in which a plasticizing part for heating and melting a material and a measuring part for storing the molten material to flow into a mold are integrated may be used, or a preplunger type injection molding machine in which the plasticizing part and the measuring part are connected may be used. As for clamping size of the injection molding machine, it is necessary to have a clamping force capable of securing a pressure at which the mold is closed and the mold is not opened by the pressure of the material injected from the measuring part. When the clamping force is weak, the mold is slightly opened, and a molding defect called a burr occurs. The occurrence of burr is not preferable because the sealing performance of the battery is significantly deteriorated.

When an inert gas such as carbon dioxide or nitrogen gas is filled into a cylinder in which a screw is disposed from a gas injection port provided in a hopper or cylinder for charging a resin composition alloyed with polyphenylene ether and polypropylene into an injection molding machine, the resin is prevented from coming into contact with oxygen, and discoloration of the gasket to be obtained is reduced. The gasket obtained in this process can prevent erroneous determination of a foreign matter inspection device in an inspection line of the gasket or a battery manufacturing line. Further, when a trace amount of an inert gas such as carbon dioxide or nitrogen gas is dissolved into the resin composition alloyed with polyphenylene ether and polypropylene at a pressure of 0.1 to 5.0 MPa, melt viscosity of the molten resin is reduced, so that shape transferability of the mold is improved, and the obtained gasket obtains higher sealing performance. As a method for dissolving 0.02 to 3.00 parts by mass of an inert gas such as carbon dioxide or nitrogen gas into the resin composition alloyed with polyphenylene ether and polypropylene, a resin composition impregnated with an inert gas obtained by charging the resin composition alloyed with polyphenylene ether and polypropylene into a high-pressure container in advance and injecting a high-pressure inert gas thereinto may be charged into an injection molding machine, or the high-pressure inert gas may be injected into the resin composition in a molten state in the injection molding machine to dissolve into the resin composition.

The above inert gas may be injected, and injection molding may be performed by reactive processing. As a result, it is presumed that fine particles of polyphenylene ether are uniformly dispersed in a matrix of polypropylene, and a gasket that favorably exhibits the characteristics of polyphenylene ether and polypropylene is easily obtained. When injection molding is performed by reactive processing, the rotation speed of the screw is set to, for example, 10 rpm or more, preferably 50 rpm or more, and further preferably 80 rpm or more. The plasticization amount of the resin composition with respect to 1 rpm of the screw can be, for example, 0.01 kg/h or more, preferably 0.1 kg/h or more, and further preferably 0.2 kg/h or more, in order to prevent the residence time in the cylinder from being too long and causing thermal deterioration. Also, the residence time of the resin composition in the cylinder can be, for example, about 1 to 20 minutes. This is for preventing the residence time from being too short to shorten the reaction time inside the cylinder, and preventing the residence time from being too long to cause thermal deterioration of the resin.

The mold used for injection molding of the gasket of the present embodiment is selected from molds having a commonly used mold structure (not shown). The mold includes a fixed mold part and a movable mold part. A spool into which a material melted from the plasticizing part of the injection molding machine is injected into the mold, a runner which is a flow path to the spool and a product portion, and a gate which is an interface between the runner and the product portion are formed on the fixed mold part. The movable mold part is formed with the product portion and a protruding portion for easily taking out the product after the melted material is cooled and solidified in the product portion. The product portion is processed such that a fixed-side product portion and a movable-side product portion have a gasket shape when the fixed mold part and the movable mold part are in close contact with each other. The gasket of the present embodiment is formed by cooling and solidifying the alloyed resin composition material melted by heat after flowing from the spool and passing to the product portion, so that the movable mold part is separated from the fixed mold part and extruded from the mold at the protruding portion in the movable mold part. In order to make the gasket of the present embodiment, when the mold temperature is raised to around the maximum use temperature of the lithium battery, reduction in sealing performance due to shrinkage of the gasket is reduced.

In order to make the gasket of the present embodiment by injection molding, the mold temperature is preferably 50°C or more and 120°C or less. When molding is performed at a mold temperature lower than 50°C, the gasket incorporated in the battery may be deformed to cause liquid leakage, which is not preferable in terms of gasket quality. When the mold temperature is raised to higher than 120°C, polypropylene as an alloy component is softened and it becomes difficult to obtain a target gasket shape, and moreover, cooling time is excessive and productivity is significantly lowered. In view of the above phenomenon, the mold temperature at the time of making the gasket is set to 50 to 120°C, and is preferably 60 to 120°C. In order to obtain a gasket having high long-term reliability of the battery, the mold temperature is preferably 80 to 120°C. In a case where high reliability is required in a high-temperature environment, the mold temperature is preferably 100 to 120°C.

A runner portion of the gasket mold of the present embodiment is selected from a cold runner method in which the runner portion is cooled and taken out together at the time of cooling the gasket, a hot runner method in which the molten state is maintained from the spool to a gate portion, and a semi-hot runner method in which the molten state is maintained up to a part of the runner. When a mold of a cold runner method or a semi-hot runner method is adopted, an unnecessary runner is generated. When the runner is pulverized to a size similar to that of the pellet using a pulverizer, the runner may be mixed with the pellet and reused within a range in which physical properties necessary for the gasket can be maintained. When the ratio of mixing the runner is 70 parts by mass or less in the entire resin material, the gasket of the present embodiment can be made. When the ratio is more than 70 parts by mass, fluidity becomes unstable due to deterioration of the resin composition, and the resin composition suddenly enters gaps of mold parts constituting the mold, so that a normal gasket cannot be obtained. When the ratio is 50 parts by mass or less, mold staining due to decomposition gas due to deterioration of the resin composition is reduced, which is preferable.

As the gate used in the gasket mold of the present embodiment, a gate method generally used in injection molding is used, such as a pin gate or a submarine gate in which the gate and the product portion are automatically cut when the movable mold part is opened, and a side gate in which the product portion and the runner portion are integrally taken out when the movable mold part is opened. In the case of the side gate method, although a transmission force for allowing the melted material to pass to various places of the product portion is high, a step of separating the product portion and the runner is increased, and thus, it is preferable to use the side gate method when an ultra-thin portion exists in the gasket or a material having significantly low fluidity is used. When the battery performance cannot be exhibited unless an ultra-thin portion exists in the gasket or a material having significantly low fluidity is used, the gasket of the present embodiment can be made with high accuracy by selecting a disk gate in which the entire gasket inner diameter surface is the gate portion. When the side gate or the disk gate has to be selected, the productivity can be improved by adding in-mold gate cut structure to the movable mold part. The gate position for making the gasket of the present embodiment is provided at a place other than an inner diameter wall portion, an outer diameter wall portion, and a bottom surface which are the seal portion of the battery.

In the gasket mold used in the present embodiment, it is preferable to control surface roughness of a portion corresponding to the product portion. In particular, a mold portion (cavity surface) forming inner and outer peripheral surfaces of the outer seal wall portion 41 of the gasket and an outer peripheral surface of the bottom seal portion 42 of the gasket (see Fig. 5) is preferably a mirror surface. The cavity surface has a numerical value of Rz (maximum height when a mold surface is measured with a stylus-type surface roughness measuring machine) as indicated in JIS B0601 of preferably 0.05 µm or more and 1.2 µm or less, and more preferably 0.05 µm or more and 0.08 µm or less. When the surface roughness is less than 0.05 µm, there is a possibility that the gasket obtained by injection molding comes into close contact with the fixed mold part side and the gasket protrudes, so that automatic dropping cannot be performed. When the surface roughness is more than 1.2 um, the sealing performance of the gasket may deteriorate, and there is a concern that there may be a risk that liquid leakage or intrusion of foreign matter (including water vapor) from the outside may occur.

The gasket mold used in the present embodiment can be designed such that a draft angle of the fixed mold product portion is 0.5 degrees or more and 4 degrees or less. The draft angle is preferably 0.5 degrees or more and less than 2 degrees, and more preferably 1 degree or more and less than 2 degrees. When the draft angle is less than 0.5 degrees, there is a possibility that a scratch is generated at the time of taking out the product from the mold and the sealing performance is significantly deteriorated. In addition, in a case where the draft angle is 4 degrees or more, there is a possibility that sealing is performed only in a part of the outer peripheral seal portion at the time of crimping when the battery is incorporated, leading to deterioration of sealing performance.

Although the present embodiment has described the gasket for a coin-type lithium battery, the gasket of the present invention can also be used for a cylindrical gasket for a lithium battery to insulate a positive electrode and a negative electrode, and a lithium battery mainly composed of an organic solvent inside the battery. Furthermore, since the gasket of the present invention has similar functions also required for a gasket for a lithium battery gasket capable of charging and discharging, the gasket of the present invention can also be used for a battery gasket having another shape regardless of the shape such as a coin shape.

### EXAMPLES

Hereinafter, specific contents of the gasket for a lithium battery (gasket for a nonaqueous electrolyte battery) according to the present invention will be described using Examples.

Polypropylene for injection molding (NOVATEC PPMH4 manufactured by Japan Polypropylene Corporation) and polyphenylene ether (PX100F polyphenylene ether resin, manufactured by Polyxylenol Singapore Pte. Ltd.) as molding materials of a gasket were blended at a mass ratio shown in Table 1 using a tumbler, kneaded using a twin-screw kneading extruder, then cooled with water, and injection molded using a pelletizer to prepare Samples 1 to 7 as materials for injection molding. In addition, polypropylene for injection molding (NOVATEC PPMH4 manufactured by Japan Polypropylene Corporation), polyphenylene ether (PX100F polyphenylene ether resin, manufactured by Polyxylenol Singapore Pte. Ltd.), and a styrene/isoprene/styrene copolymer hydrogenated product (SEPS) (SEPTON 2104 manufactured by Kuraray Co., Ltd.) as molding materials of a gasket were blended at a ratio shown in Table 2 using a tumbler, kneaded using a twin-screw kneading extruder, then cooled with water, and injection molded using a pelletizer to prepare Samples 8 to 16 as materials for injection molding. Incidentally, an injection molding aid is appropriately added during dry blending.

### - Evaluation 1

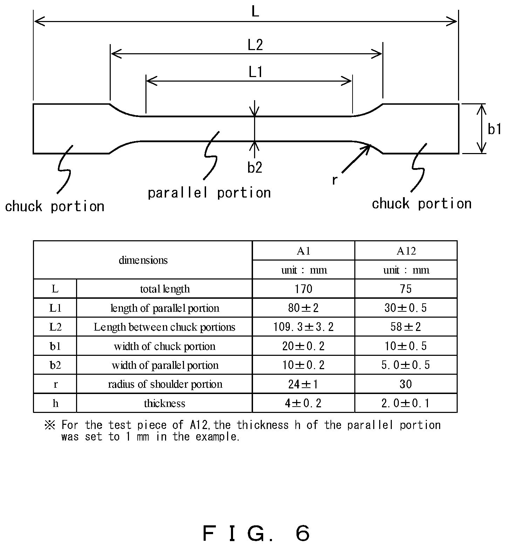

As sample materials shown in Tables 1 and 2, a dumbbell test piece of Type A1 shown in JIS K7139 (see Fig. 6) was produced by an injection molding method. Using these dumbbell test pieces, the deflection temperature under load was measured in accordance with the method shown in JIS K7191. That is, the deflection temperature under load test measuring machine applies a load of 1.80 MPa to the dumbbell test piece, heats the liquid in the test machine while stirring, and records the temperature when the dumbbell test piece is deflected by 0.5 mm (deflection temperature under load). In these results, a deflection temperature under load of 60°C or more was evaluated as O, and a deflection temperature under load of lower than 60°C was evaluated as ×. As a result, Sample 1 and Sample 2 were unsuitable at 29°C and 54°C, respectively. Other samples cleared the target value. Samples 5 to 16 had a deflection temperature under load of 100°C or more.

### - Evaluation 2

Using the sample materials shown in Tables 1 and 2, a test piece having a planar shape of a dumbbell test piece of Type A12 (see Fig. 6) shown in JIS K7139, a thickness of an evaluation part (parallel portion) of 1 mm, and a thickness of a chuck portion of 2 mm was produced by an injection molding method. Using these test pieces, a tensile test was performed under a condition of a tensile speed of 50 mm/min in an atmosphere of 120°C . In the tensile test, a case where the tensile elongation rate was 20% or more and 300% or less was evaluated as O, and a case where the tensile elongation rate was less than 20% or more than 300% was evaluated as ×. Sample 1, Sample 2, and Sample 7 were unsuitable at 450%, 320%, and 16%, respectively. Other samples cleared the target value.

### - Evaluation 3

Using the sample materials shown in Tables 1 and 2, gasket samples were prepared by an injection molding method using a gasket mold for a lithium battery of CR2032 size (cylindrical shape with a diameter of 20 mm and a thickness of 32 mm). The mold temperature at that time was set to 70°C, the resin temperature was set to 270°C, and the injection speed and the holding pressure were appropriately adjusted in accordance with characteristics of the material. One hundred gasket samples prepared from the respective materials were checked, and a sample in which a molding defect such as a weld, a short shot, or a burr did not occur was evaluated as O, and a sample in which a molding defect occurred was evaluated as ×. As a result, a burr occurred in Sample 1. In addition, Sample 7 was unsuitable because a short shot occurred. It was found that the other samples could be molded well. In addition, when gasket samples were prepared under the same conditions as described above except that the mold temperature was changed to 100°C and the presence or absence of molding defects was confirmed for 100 samples, the results were the same as those at a mold temperature of 70°C. When 100 gasket samples were prepared by an injection molding method under the same conditions as described above using a molding material containing 100 parts by mass of polyphenylene sulfide (PPS), a weld occurred in all samples. Therefore, there is a possibility that cracking or the like occurs in the gasket when the exterior can is crimped in battery manufacturing.

### - Evaluation 4

Hooks were attached above and below a test section of a tensile tester, and the gasket sample (sample obtained by injection molding at a mold temperature of 70°C) was hooked on the hooks to perform a tensile test at a test speed of 100 mm/min at room temperature. A sample having a movement amount when the tensile load reached 100 N of 25 mm or more was evaluated as O, and a sample having a movement amount of less than 25 mm was evaluated as ×. As a result, Sample 7 was evaluated as unsuitable because it stretched only 20 mm and was broken at the stage of deformation. The other samples reached the target values. In addition, the same tensile test as described above was performed on the gasket sample obtained by injection molding at a mold temperature of 100°C. At this time, a sample having a movement amount when the tensile load reached 150 N of 15 mm or more was evaluated as O, and a sample having a movement amount of less than 15 mm was evaluated as ×. As a result, Sample 7 was evaluated as unsuitable because it stretched only 8 mm and was deformed. The other samples reached the target values.

The evaluation results of Evaluations 1 to 4 are summarized in Tables 1 and 2. Samples 3 to 6, 8 to 16 were found to show good results. It was found that Samples 1 and 2 had low deflection temperature under load and were insufficient in heat resistance. Further, it was found that Sample 7 did not stretch and cannot satisfy specification of the gasket. Furthermore, it was found that the tensile elongation rates of Samples 1, 2, and 7 were not suitable, and molding defects were likely to occur in Samples 1 and 7.

### [Table 1]

**Table 1**

| | Comparative Example | Comparative Example | Example | Example | Example | Example | Comparative Example |
|---|---|---|---|---|---|---|---|
| Sample number | 1 | 2 | 3 | 4 | 5 | 6 | 7 |
| Content ratio of polypropylene (Parts by mass) | 100 | 82 | 80 | 63 | 40 | 29 | 24 |
| Content ratio of polyphenylene ether (Parts by mass) | 0 | 18 | 20 | 37 | 60 | 71 | 76 |
| Deflection temperature under load | × | × | ○ | ○ | ○ | ○ | ○ |
| Tensile elongation (%) | × | × | ○ | ○ | ○ | ○ | × |
| Tensile test | ○ | ○ | ○ | ○ | ○ | ○ | × |
| Moldability | × | ○ | ○ | ○ | ○ | ○ | × |
| Evaluation of gasket | ○ | ○ | ○ | ○ | ○ | ○ | × |

### [Table 2]

**Table 2**

| | Example | Example | Example | Example | Example | Example | Example | Example | Example |
|---|---|---|---|---|---|---|---|---|---|
| Sample number | 8 | 9 | 10 | 11 | 12 | 13 | 14 | 15 | 16 |
| (a) Content ratio of polypropylene (Parts by mass) | 45.9 | 46.4 | 47.0 | 47.5 | 49.3 | 41.1 | 43.1 | 46.0 | 49.3 |
| (b) Content ratio of polyphenylene ether (Parts by mass) | 54.1 | 53.6 | 53.0 | 52.5 | 50.7 | 58.9 | 56.9 | 54.0 | 50.7 |
| (c) Styrene/isoprene/ styrene copolymer (Parts by mass) | 10.3 | 11.6 | 12.9 | 14.3 | 18.5 | 12.9 | 18.5 | 26.3 | 13.8 |
| Deflection temperature under load | ○ | ○ | ○ | ○ | ○ | ○ | ○ | ○ | ○ |
| Tensile elongation (%) | ○ | ○ | ○ | ○ | ○ | ○ | ○ | ○ | ○ |
| Tensile test | ○ | ○ | ○ | ○ | ○ | ○ | ○ | ○ | ○ |
| Moldability | ○ | ○ | ○ | ○ | ○ | ○ | ○ | ○ | ○ |
| Evaluation of gasket | ○ | ○ | ○ | ○ | ○ | ○ | ○ | ○ | ○ |

### INDUSTRIAL APPLICABILITY

An alloy of polypropylene and polyphenylene ether in the present invention can be favorably used as a gasket for a lithium battery. Further, it can be used not only for the gasket for a lithium battery but also for a gasket for a lithium ion battery, and also for various gaskets for a nonaqueous electrolyte battery.

### REFERENCE SIGNS LIST

- 1: Coin type battery
- 2: Exterior can
- 3: Sealing plate
- 4: Gasket
- 5: Power generating element
- 21: Side wall
- 22: Bottom surface portion
- 31: Tube portion
- 31a: Base end portion
- 31b: Step portion
- 31c: Open portion
- 32: Flat portion
- 41: Outer seal wall portion
- 42: Bottom seal portion
- 43: Annular recess
- 44: Annular rib
- 51: Positive electrode material
- 52: Negative electrode material
- 53: Separator
- 54: Positive electrode ring
- 54a: Cylindrical portion
- 54b: Flange portion

## Claims

1. A gasket for a nonaqueous electrolyte battery formed by injection molding, comprising:
a resin obtained by alloying polypropylene and polyphenylene ether as the main components.

2. The gasket for a nonaqueous electrolyte battery according to claim 1, wherein a mass ratio of polypropylene to polyphenylene ether as the main components is 25 : 75 to 80 : 20.

3. The gasket for a nonaqueous electrolyte battery according to claim 1 or 2, comprising:
5.0 to 30.0 parts by mass of a block copolymer based on 100 parts by mass of the total of the polypropylene and the polyphenylene ether as the main components,
wherein the block copolymer is a hydrogenated product containing a vinyl aromatic compound block and an isoprene polymer block, and
the content of the vinyl aromatic compound unit in the block copolymer is 50% by mass or more and less than 80% by mass.

4. The gasket for a nonaqueous electrolyte battery according to claim 3, wherein when the resin is injection molded to form a test piece having a dumbbell test piece shape of Type A12 shown in JIS K7139 and having a thickness of parallel portion of 1 mm, a tensile elongation rate of the test piece at a tensile speed of 50 mm/min in an atmosphere of 120°C is 20 to 300%.

5. The gasket for a nonaqueous electrolyte battery according to claim 4, wherein when the resin is injection molded to form a gasket sample for a CR2032 size battery, a movement amount until a tensile load reaches 150 N by performing a tensile test at a test speed of 100 mm/min on the gasket sample is 15 mm or more.

6. The gasket for a nonaqueous electrolyte battery according to claim 5, wherein the polyphenylene ether has an intrinsic viscosity at 30°C measured in chloroform of 0.2 to 0.8 dL/g.

7. A method for manufacturing a gasket for a nonaqueous electrolyte battery, the gasket being produced by injection molding using one obtained by previously kneading a material containing polypropylene, polyphenylene ether, and a molding aid with a twin-screw kneading extruder and cooling and solidifying a resin composition discharged from the twin-screw kneading extruder.

8. The method for manufacturing a gasket for a nonaqueous electrolyte battery according to claim 7, wherein the material has a mass ratio of polypropylene to polyphenylene ether of 25 : 75 to 80 : 20, and contains 5.0 to 30.0 parts by mass of a block copolymer based on 100 parts by mass of the total of the polypropylene and the polyphenylene ether,
the block copolymer is a hydrogenated product containing a vinyl aromatic compound block and an isoprene polymer block, and
the content of the vinyl aromatic compound unit in the block copolymer is 50% by mass or more and less than 80% by mass.

9. The method for manufacturing a gasket for a nonaqueous electrolyte battery according to claim 8, comprising setting a mold temperature during the injection molding to 50 to 120°C.

10. The method for manufacturing a gasket for a nonaqueous electrolyte battery according to claim 9, wherein surface roughness of a cavity surface at a mold portion forming at least an outer seal wall portion and a bottom seal portion of the gasket as a mold used for the injection molding has a numerical value of Rz indicated by JIS B0601 of 0.05 to 1.2 µm.

11. The method for manufacturing a gasket for a nonaqueous electrolyte battery according to claim 10, wherein as the molding material, one obtained by mixing a pulverized material of an unnecessary molded article portion generated during the gasket molding at a ratio of 70 parts by mass or less of the entire resin composition is used.

12. The method for manufacturing a gasket for a nonaqueous electrolyte battery according to claim 10 or 11, wherein injection molding is performed by dissolving 0.02 to 3.00 parts by mass of an inert gas into the molding material.
